# EUROPEAN PATENT APPLICATION

(11) **EP 4 650 766 A2**
(43) Date of publication of application: **19.11.2025**
(21) Application number: 25205583.5
(22) Date of filing: 11.12.2018
(51) Int. Cl.: G01N 27/30

(54) **ELECTRODE FILM AND ELECTROCHEMICAL MEASUREMENT SYSTEM**

(30) Priority: 11.12.2017 JP 2017237143; 10.12.2018 JP 2018230540
(62) Divisional of application: 18887762.5
(71) Applicant: Nitto Denko Corporation, Ibaraki-shi Osaka 567-8680 (JP)
(72) Inventor: HAISHI, Motoki, Osaka, 567-8680 (JP); TAKEMOTO, Mitsunobu, Osaka, 567-8680 (JP); TAKEDA, Kentaro, Osaka, 567-8680 (JP); OSUKA, Koya, Osaka, 567-8680 (JP)
(74) Representative: Gill Jennings & Every LLP

(57) **Abstract**

An electrode film includes a flexible substrate, a functional layer disposed at one side in a thickness direction of the flexible substrate, and an electrically conductive carbon layer disposed at one side in the thickness direction of the functional layer and having an sp² bond and an sp³ bond.

## Description

### TECHNICAL FIELD

The present invention relates to an electrode film and an electrochemical measurement system.

### BACKGROUND ART

Conventionally, an electrochemical measurement method in which a minute amount of ion and a residual material in a solution are subjected to qualitative analysis or quantitative analysis by using electrical chemical reaction has been known. Examples of the electrochemical measurement method include a method of measuring a potential difference in a solution and a method of measuring an electric current in a solution.

The electrochemical measurement system used for the electrochemical measurement method generally includes at least a working electrode and a reference electrode as electrodes, and detects a measuring object by the working electrode. As the working electrode, platinum, gold, glassy carbon, boron-doped diamond, or the like are used. However, precious metals such as platinum are rare, the glassy carbon has poor film-forming properties and is not easily used as an electrode, and the boron-doped diamond needs to be produced at a greatly high temperature.

Then, a carbon electrode configured from a fine crystal domain that consists of an sp² bond and an sp³ bond has been recently considered as the working electrode (ref: Patent Document 1).

The carbon electrode of Patent Document 1 can be easily formed at a relatively low temperature, and requires no production facilities for high temperature processing. Also, the electrode has a large potential window to detect various materials.

### Citation List

### Patent Document

Patent Document 1: Japanese Unexamined Patent Publication No. 2006-90875

### SUMMARY OF THE INVENTION

### PROBLEM TO BE SOLVED BY THE INVENTION

A film-forming of the carbon electrode of Patent Document 1 is carried out on a hard board such as silicon board in a producing method such as batch method. Thus, productivity is poor.

Then, to improve the productivity, use of a roll-to-roll method is considered. At this time, a flexible substrate such as polymer film is used. When the film-forming of the carbon electrode is carried out on the flexible substrate, however, there is a disadvantage of remarkable rise of a resistance value of the carbon electrode. That is, the formed carbon electrode is poor in properties, such as electrical conductivity (low resistance), necessary for an electrode.

The present invention provides an electrode film and an electrochemical measurement system having excellent productivity and having excellent electrode properties.

### MEANS FOR SOLVING THE PROBLEM

The present invention [1] includes an electrode film including a flexible substrate, a functional layer disposed at one side in a thickness direction of the flexible substrate, and an electrically conductive carbon layer disposed at one side in the thickness direction of the functional layer and having an sp² bond and an sp³ bond

The present invention [2] includes the electrode film described in [1], wherein the functional layer is a gas barrier layer.

The present invention [3] includes the electrode film described in [1] or [2], wherein the functional layer is a metal layer.

The present invention [4] includes the electrode film described in any one of [1] to [3], wherein the functional layer has a thickness of 5 nm or more.

The present invention [5] includes the electrode film described in any one of [1] to [4], wherein a thickness of an oxide film formed at a one-side surface in the thickness direction of the functional layer is below 3 nm.

The present invention [6] includes the electrode film described in any one of [1] to [5], wherein the flexible substrate is a polymer film.

The present invention [7] includes the electrode film described in any one of [1] to [6], wherein the electrode film is an electrode for electrochemical measurement.

The present invention [8] includes an electrochemical measurement system including the electrode film described in [7].

### EFFECT OF THE INVENTION

According to the electrode film of the present invention, a flexible substrate is used as a substrate, so that the electrode film can be produced in a roll-to-roll process. Thus, productivity is excellent. Also, a functional layer is provided between a flexible substrate and an electrically conductive carbon layer, so that a bad influence imparted by the flexible substrate at the time of film-forming of the electrically conductive carbon layer can be suppressed. Therefore, electrode properties such as electrical conductivity can be made excellent.

The electrochemical measurement system of the present invention includes an electrode film having excellent electrode properties, so that the system can accurately carry out electrochemical measurement.

### BRIEF DESCRIPTION OF THE DRAWINGS

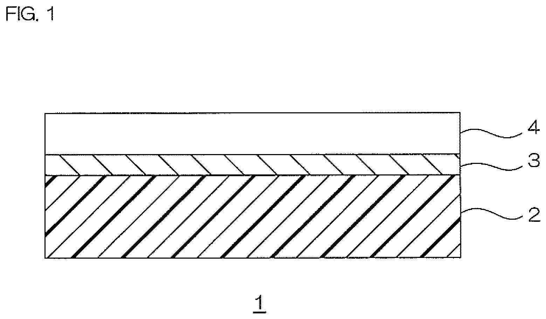

FIG. 1 shows a cross-sectional view of one embodiment of an electrode film of the present invention.

### DESCRIPTION OF EMBODIMENTS

One embodiment of an electrode film of the present invention is described with reference to FIG. 1. In FIG. 1, the up-down direction on the plane of the sheet is an up-down direction (thickness direction, first direction), the upper side on the plane of the sheet is an upper side (one side in the thickness direction, one side in the first direction), and the lower side on the plane of the sheet is a lower side (the other side in the thickness direction, the other side in the first direction). The right-left direction and the depth direction on the plane of the sheet are a plane direction perpendicular to the up-down direction. To be specific, directions are in conformity with direction arrows of each view.

### 1. Electrode Film

An electrode film 1 has a film shape (including a sheet shape) having a predetermined thickness, extends in a predetermined direction (plane direction) perpendicular to the thickness direction, and has a flat upper surface (one-side surface in the thickness direction) and a flat lower surface (the other-side surface in the thickness direction).

To be specific, as shown in FIG. 1, the electrode film 1 includes a flexible substrate 2, a functional layer 3 that is disposed at the upper side (one side in the thickness direction) of the flexible substrate 2, and an electrically conductive carbon layer 4 that is disposed at the upper side of the functional layer 3. That is, the electrode film 1 includes the flexible substrate 2, the functional layer 3, and the electrically conductive carbon layer 4 in this order. Preferably, the electrode film 1 consists of the flexible substrate 2, the functional layer 3, and the electrically conductive carbon layer 4. The details of each layer are described in the following.

### 2. Flexible Substrate

The flexible substrate 2 is a substrate that has flexibility and supports the functional layer 3 and the electrically conductive carbon layer 4. The flexible substrate 2 is the lowermost layer of the electrode film 1 and has a film shape. The flexible substrate 2 is disposed on the entire lower surface of the functional layer 3 so as to be in contact with the lower surface of the functional layer 3.

Examples of the flexible substrate 2 include polymer film and thin glass film. Examples of a material for the polymer film include polyester resin (for example, polyethylene terephthalate and polyethylene naphthalate), acetate resin, polyether sulfone resin, polycarbonate resin, polyamide resin, polyimide resin, polyolefin resin (for example, polycycloolefin polymer), (meth)acrylic resin, polyvinyl chloride resin, polyvinylidene chloride resin, polystyrene resin, polyvinyl alcohol resin, polyarylate resin, and polyphenylene sulfide resin. Preferably, a polyester resin, a polycarbonate resin, and a polyolefin resin are used, more preferably, a polyester resin is used.

As the flexible substrate 2, in view of heat resistance, mechanical strength, flexibility, or the like, preferably, a polyester film and a thin glass film are used, more preferably, a polyester film is used, further more preferably, a polyethylene terephthalate film is used.

The flexible substrate 2 has a thickness of, for example, 2 µm or more, preferably 20 µm or more, and for example, 200 µm or less, preferably 120 µm or less, more preferably 100 µm or less.

### 3. Functional Layer

The functional layer 3 is a layer that suppresses a bad influence imparted by the flexible substrate 2 to the electrically conductive carbon layer 4. The functional layer 3 has a film shape. The functional layer 3 is disposed on the entire upper surface of the flexible substrate 2 so as to be in contact with the upper surface of the flexible substrate 2. To be more specific, the functional layer 3 is disposed between the flexible substrate 2 and the electrically conductive carbon layer 4 so as to be in contact with the upper surface of the flexible substrate 2 and the lower surface of the electrically conductive carbon layer 4.

Examples of the functional layer 3 include gas barrier layer, electrically conductive layer, adhesive layer, and surface-smoothing layer.

The gas barrier layer is a layer that shields transmission of water and organic gas. When the functional layer 3 is the gas barrier layer, the functional layer 3 can suppress uptake of an impurity gas (water, organic gas, or the like) emitted from the flexible substrate 2 into the electrically conductive carbon layer 4 at the time of forming of the electrically conductive carbon layer 4. Thus, the impurity content of the electrically conductive carbon layer 4 can be reduced, and a reduction in the properties intrinsic to the electrically conductive carbon layer 4 can be suppressed.

The electrically conductive layer is a layer having electrical conductivity. When the functional layer 3 is the electrically conductive layer, the functional layer 3 assists the electrically conductive carbon layer 4 in electrical conductivity to allow the electrical conductivity of the electrode film 1 (surface of the electrically conductive carbon layer 4) to improve. A surface resistance value of the electrically conductive layer is, for example, 10 kΩ/□ or less. The surface resistance value can be measured by a four-terminal method in conformity with JIS K 7194.

The adhesive layer is layer that improves adhesive properties of the electrically conductive carbon layer 4 with the flexible substrate 2. When the functional layer 3 is the adhesive layer, peeling and falling off of the electrically conductive carbon layer 4 can be suppressed, and durability of the electrode film 1 can be improved.

The surface-smoothing layer is a layer that smooths the upper surface of the flexible substrate 2. When the functional layer 3 is the surface-smoothing layer, the surface (the upper surface and the lower surface) of the electrically conductive carbon layer 4 can be smoothed, so that a noise due to unevenness of the electrically conductive carbon layer 4 can be suppressed.

The functional layer 3 is preferably at least the gas barrier layer, more preferably a layer that functions as the gas barrier layer and the electrically conductive layer.

To be specific, examples of the functional layer 3 include inorganic layer and organic layer. As the gas barrier layer, preferably, an inorganic layer is used. The gas barrier layer may be a layer obtained by alternately laminating the organic layer and the inorganic layer in plurals. As the electrically conductive layer, preferably, an electrically conductive inorganic layer is used. As the adhesive layer, preferably, an inorganic layer and an organic layer containing a silane coupling agent are used. As the surface-smoothing layer, preferably, a thin inorganic layer and a thin organic layer are used.

Examples of the inorganic layer include metal layer and inorganic compound layer.

The metal layer is formed of, for example, titanium, chromium, tungsten, aluminum, copper, silver, silicon, or an alloy thereof. Preferably, as the metal layer, a titanium layer is used.

The inorganic compound layer is, for example, formed of NaF, Na₃AlF₆, LiF, MgF₂, CaF₂, BaF₂, SiO₂, LaF₃, CeF, Al₂O₃, or a mixture thereof.

As the inorganic layer, preferably, a metal layer is used. When the functional layer 3 is the metal layer, it functions as both of the gas barrier layer and the electrically conductive layer. That is, the metal layer can shield the impurity gas emitted from the flexible substrate 2 and suppress the uptake thereof into the electrically conductive carbon layer 4 at the time of the forming of the electrically conductive carbon layer 4. As a result, a reduction in the properties intrinsic to the electrically conductive carbon layer 4 (particularly, electrical conductivity) can be suppressed. Also, the metal layer as an electrically conductive layer assists the electrically conductive carbon layer 4 in electrical conductivity. The electrical conductivity of the electrode film 1 can be remarkably improved by these functions.

When the functional layer 3 is the metal layer, the upper surface thereof may or may not have a metal oxide layer (one example of an oxide film). The upper surface thereof preferably does not have the metal oxide layer or have the metal oxide layer having a thickness of below 3 nm. That is, the metal oxide layer formed at the upper surface of the functional layer 3 has a thickness of preferably below 3nm, more preferably 1 nm or less. The functional layer 3 most preferably does not have the metal oxide layer.

In this manner, the adhesive properties of the functional layer 3 with the electrically conductive carbon layer 4 are excellent, and the peeling of the electrically conductive carbon layer 4 at the time of the use of the electrode can be suppressed. When a degree of vacuum at the time of the forming of the carbon layer is low and the flexible substrate 2 contains a degassing component such as moisture, for example, there may be a case where the metal oxide layer is formed at the upper surface of the metal layer (the functional layer 3), and the adhesive properties with respect to the electrically conductive carbon layer 4 are reduced. By setting the thickness of the metal oxide layer within the above-described range, the adhesive properties can be excellently retained.

When the functional layer 3 is the inorganic layer, the functional layer 3 has a thickness of, for example, 2 nm or more, preferably 3 nm or more, more preferably 4 nm or more, further more preferably 7 nm or more, and for example, 700 nm or less, preferably 100 nm or less, more preferably 50 nm or less, further more preferably 30 nm or less, particularly preferably 20 nm or less. By setting the thickness of the inorganic layer within the above-described range, gas barrier properties and the adhesive properties can be improved.

The organic layer is, for example, formed from a resin composition such as acrylic resin, urethane resin, melamine resin, alkyd resin, siloxane resin, and organic silane condensate. The organic layer may also contain particles such as inorganic particles and organic particles in addition to the above-described material.

When the functional layer 3 is the organic layer, the functional layer 3 has a thickness of, for example, 15 nm or more, preferably 20 nm or more, and for example, 1500 nm or less, preferably 1000 nm or less, more preferably 800 nm or less. By setting the thickness of the organic layer within the above-described range, the upper surface of the electrode film 1 can be more surely smoothed.

Surface roughness Ra (arithmetic average roughness) of the upper surface (one-side surface in the thickness direction) of the functional layer 3 is, for example, 5.0 nm or less, preferably 3.0 nm or less, more preferably 2.0 nm or less, and for example, 0.1 nm or more. By setting the surface roughness of the upper surface of the functional layer 3 at the above-described upper limit or less, the surface roughness of the electrode film 1 can be reduced, and as a result, the noise can be suppressed when the electrode film 1 is used as an electrode for electrochemical measurement.

The surface roughness can be measured by observing a range of a 500 nm square on the upper surface of the functional layer 3 by using a scanning probe microscope (manufactured by Digital Instruments, Inc., "Nanoscope IV").

The functional layer 3 may consist of a single inorganic layer or a single organic layer, may consist of a plurality of inorganic layers or a plurality of organic layers, or may consist of a plurality of mixed layers of the inorganic layer and the organic layer.

### 4. Electrically Conductive Carbon Layer

The electrically conductive carbon layer 4 is a layer that has electrode properties (large potential window, electrical conductivity, or the like) and functions as an electrode.

The electrically conductive carbon layer 4 is formed from carbon having an sp² bond and an sp³ bond. That is, the electrically conductive carbon layer 4 is a layer that has a graphite structure and a diamond structure. In this way, the electrically conductive carbon layer 4 has excellent electrical conductivity, while enlarging the potential window. Also, the electrically conductive carbon layer 4 has excellent film-forming properties at a low temperature.

A ratio (sp³/sp²) of sp³ to sp² is, for example, 0.05 or more, preferably 0.10 or more, and for example, 2.00 or less, preferably 1.50 or less.

The above-described ratio can be obtained by measuring a bond energy (unit: eV, horizontal axis) and the intensity (unit: CPS, vertical axis) of the electrically conductive carbon layer 4 by using an X-ray electron spectroscopy for chemical analysis device (manufactured by ULVAC-PHI, INCORPORATED, "Quantum 2000") to calculate the peak height of sp³ and that of sp² in a measurement graph. The details of the measurement conditions are described later in Examples.

The electrically conductive carbon layer 4 has a thickness of, for example, 1 nm or more, preferably 2 nm or more, more preferably 5 nm or more, and for example, 500 nm or less, preferably 100 nm or less, more preferably 50 nm or less.

The electrically conductive carbon layer 4 may also contain another additive in addition to the carbon. The electrically conductive carbon layer 4 may have a structure consisting of a plurality of layers each having a different structure, composition, additive concentration, or the like, or may have a structure in which the structure, the composition, the additive concentration, or the like change stepwisely (in a gradation state).

### 5. Producing Method of Electrode Film

The electrode film 1 is, for example, produced by the steps of preparing the flexible substrate 2, providing the functional layer 3 on the flexible substrate 2, and providing the electrically conductive carbon layer 4 on the functional layer 3.

First, the known or commercially available flexible substrate 2 is prepared.

Thereafter, in view of adhesive properties of the flexible substrate 2 with the functional layer 3, the upper surface of the flexible substrate 2 can be, for example, subjected to priming treatment such as sputtering, corona discharge, flame treatment, ultraviolet application, electron beam application, chemical conversion, and oxidation as needed. Also, the flexible substrate 2 can be subjected to dust removal and cleaning by solvent cleaning, ultrasonic cleaning, or the like.

Next, the functional layer 3 is provided on the upper surface of the flexible substrate 2.

When the functional layer 3 is the inorganic layer, preferably, the functional layer 3 that is the inorganic layer is formed on the upper surface of the flexible substrate 2 by a drying method.

Examples of the drying method include PVD method (physical vapor deposition method) and CVD method (chemical vapor deposition method). Preferably, a PVD method is used.

Examples of the PVD method include sputtering method, vacuum vapor deposition method, laser vapor deposition method, and ion plating method (arc vapor deposition method). Preferably, a sputtering method is used. By using the method, a thin inorganic layer can be formed.

Examples of the sputtering method include high-power pulse sputtering method, electronic cyclotron resonance sputtering method, unbalanced magnetron sputtering method, RF sputtering method, DC sputtering method (DC magnetron sputtering method or the like), DC pulse sputtering method, and ion beam sputtering method. In view of film-forming rate and film thickness uniformity in roll-to-roll production, preferably, a DC sputtering method is used.

When the sputtering method is used, examples of a target material include the above-described inorganics that configure the inorganic layer. Preferably, titanium is used.

An example of a sputtering gas introduced into a film-forming chamber of the sputtering method includes an inert gas such as Ar. Also, a reactive gas such as oxygen gas can be used in combination as needed. When the reactive gas is used in combination, a flow ratio of the reactive gas is not particularly limited, and the flow ratio thereof to the total flow ratio of the sputtering gas and the reactive gas is, for example, 0.1 flow% or more and 5 flow% or less.

The sputtering method is carried out under vacuum. To be specific, in view of suppression of a reduction in the sputtering rate, discharging stability, or the like, atmospheric pressure at the time of sputtering is, for example, 1 Pa or less, preferably 0.7 Pa or less.

A film-forming temperature (substrate temperature) is, for example, 200°C or less, preferably 150°C or less, more preferably 70°C or less, and for example, -40°C or more, preferably 0°C or more, more preferably 30°C or more.

To form the functional layer 3 having a desired thickness, the conditions of the target material and the sputtering may be appropriately set, and the sputtering may be carried out in a plurality of times.

When the functional layer 3 is the organic layer, preferably, the functional layer 3 that is the organic layer is formed on the upper surface of the flexible substrate 2 by a wet method.

To be specific, the resin composition that forms the organic layer is wet-applied to the upper surface of the flexible substrate 2, so that the functional layer 3 is formed on the upper surface of the flexible substrate 2.

To be specific, for example, a diluted solution (varnish) obtained by diluting the resin composition with a solvent is prepared, subsequently, the diluted solution is applied to the upper surface of the flexible substrate 2, and the diluted solution is dried.

An application method can be appropriately selected in accordance with the diluted solution and the flexible substrate 2, and examples thereof include gravure coating method, dip coating method, air knife coating method, curtain coating method, roller coating method, wire bar coating method, and extrusion coating method.

A drying temperature is, for example, 50°C or more, preferably 70°C or more, and for example, 200°C or less, preferably 100°C or less. Drying time is, for example, 0.5 minutes or more, preferably 1 minute or more, and for example, 60 minutes or less, preferably 20 minutes or less.

Thereafter, when the resin composition contains an active energy-ray curable resin, after drying of the diluted solution, by applying an active energy ray thereto, the active energy-ray curable resin is cured.

In this manner, an intermediate including the flexible substrate 2 and the functional layer 3 that is disposed on the upper surface thereof is obtained.

Next, the electrically conductive carbon layer 4 is provided on the upper surface of the functional layer 3. Preferably, the electrically conductive carbon layer 4 is formed on the upper surface of the functional layer 3 by the drying method.

As the drying method, the above-described method described in the functional layer 3 is used. In view of reduction of hydrogen contained in the electrically conductive carbon layer 4, and furthermore reliable achievement of film-forming of the electrically conductive carbon layer 4, preferably, a sputtering method is used. In view of easy achievement of the film-forming of the electrically conductive carbon having a desired range of ratio of the sp³ bond to the sp² bond, improvement of the film-forming rate, and moreover, adoption of the roll-to-roll method, more preferably, a high-power pulse sputtering method is used.

When the sputtering method is used, an example of the target material includes carbon. In view of adjustment of film quality and process stability, the target material may contain a known additive.

An example of the sputtering gas introduced into the film-forming chamber of the sputtering method includes inert gas such as Ar and Xe. An oxygen gas as the reactive gas is not used in combination at the time of the sputtering of the electrically conductive carbon layer 4.

The sputtering method is carried out under vacuum. To be specific, in view of suppression of a reduction in the sputtering rate, discharging stability, or the like, the atmospheric pressure at the time of the sputtering is, for example, 1 Pa or less, preferably 0.7 Pa or less.

The film-forming temperature (substrate temperature) is, for example, 200°C or less, preferably 150°C or less, more preferably 70°C or less, and for example, -40°C or more, preferably 0°C or more, more preferably 30°C or more.

To form the electrically conductive carbon layer 4 having a desired thickness, the conditions of the target material and the sputtering may be appropriately set, and the sputtering may be carried out in the plurality of times.

In this manner, the electrode film 1 is obtained.

The total thickness of the obtained electrode film 1 is, for example, 2 µm or more, preferably 20 µm or more, and for example, 200 µm or less, preferably 120 µm or less, more preferably 100 µm or less.

The surface roughness Ra of the electrically conductive carbon layer 4 in the electrode film 1 (that is, the upper surface of the electrode film 1) is, for example, 5.0 nm or less, preferably 2.0 nm or less. By setting the surface roughness of the electrode film 1 at the above-described upper limit or less, the noise can be suppressed when the electrode film 1 is used as an electrode for electrochemical measurement.

The surface resistance value on the upper surface of the electrode film 1 (surface of the electrically conductive carbon layer 4) is, for example, 1.0 × 10⁴ Ω/□ or less, preferably 1.0 × 10³ Ω/□ or less, more preferably 5.0 × 10² Ω/□ or less.

The surface resistance value can be measured by the four-terminal method in conformity with JIS K 7194.

In the above-described producing method, the functional layer 3 and the electrically conductive carbon layer 4 may be formed on the flexible substrate 2 in this order, while the flexible substrate 2 is conveyed by the roll-to-roll method, or a portion or all of these layers may be formed by a batch method (single wafer processing). In view of productivity, preferably, each of the layers is formed on the flexible substrate 2, while the flexible substrate 2 is conveyed by the roll-to-roll method.

### 6. Electrode Film for Electrochemical Measurement and Electrochemical Measurement System

The electrode film 1 can be used as various electrodes, and preferably can be used as an electrode (preferably, a working electrode) for electrochemical measurement conducting an electrochemical measurement method.

When the electrode film 1 is used as an electrode, in view of adjustment of an exposed surface of the electrically conductive carbon layer 4, an insulating layer may be also provided on the upper surface of the electrode film 1. Or, the entire electrode film 1, or the electrically conductive carbon layer 4 and the functional layer 3 may be subjected to pattering into a desired shape.

An example of the insulating layer includes the above-described polymer film described in the flexible substrate 2.

Examples of the electrochemical measurement method include potential difference measurement techniques such as potential difference measurement method and electric current measurement techniques such as electric conductivity measurement method, amperometry-voltammetry method, and AC impedance method.

The electrochemical measurement system of the present invention uses the electrode film 1 as a working electrode.

To be specific, the electrochemical measurement system in the potential difference measurement technique includes the electrode film 1, a reference electrode, and a potentiometer that measures an electromotive force between the electrodes. The electrochemical measurement system in the electric current measurement technique includes the electrode film 1, the reference electrode, a counter electrode, a potentiostat that controls these electrodes' potentials, and an electric current detecting element that measures an electric current flowing between the electrode film 1 and the counter electrode.

Examples of the reference electrode include silver/silver chloride. Examples of the counter electrode include platinum, gold, and nickel.

### 7. Function and Effect

According to the electrode film 1, the flexible substrate 2 is used as a substrate, so that the electrode film 1 can be produced in a roll-to-roll process. Thus, the productivity is excellent. Also, the functional layer 3 is provided between the flexible substrate 2 and the electrically conductive carbon layer 4, so that a bad influence imparted by the flexible substrate 2 at the time of the film-forming of the electrically conductive carbon layer 4 can be suppressed.

To be specific, when the functional layer 3 is the gas barrier layer, in a case where the film-forming of the electrically conductive carbon layer 4 is carried out at the upper side of the flexible substrate 2 in a roll-to-roll process, arrival of the impurity gas emitted from the flexible substrate 2 at the inside of the electrically conductive carbon layer 4 can be suppressed by the gas barrier layer. Thus, entry of the impurities into the electrically conductive carbon layer 4 having the sp² bond and the sp³ bond can be suppressed, and the electrically conductive carbon layer 4 can the electrode properties such as electrical conductivity and large potential window provided in the electrically conductive carbon layer 4 can be preferably developed. Furthermore, the film-forming properties with respect to the intermediate consisting of the flexible substrate 2 and the functional layer 3 are excellent.

Also, when the functional layer 3 is the metal layer, the gas barrier properties and the electrical conductivity are provided. Thus, as the gas barrier layer, the entry of the impurities into the electrically conductive carbon layer 4 can be suppressed, and the electrode properties such as electrical conductivity and large potential window provided in the electrically conductive carbon layer 4 can be preferably developed. Also, as the electrically conductive layer, the electrical conductivity of the electrically conductive carbon layer 4 can be complemented or assisted. In this manner, the electrical conductivity (that is, a low surface resistance value) of the electrode film 1 can be remarkably made excellent.

The electrochemical measurement system including the electrode film 1 has excellent productivity, and can preferably develop the electrode properties such as electrical conductivity and large potential window. Thus, detection accuracy of a measuring object can be improved, and various materials can be measured.

### 8. Modified Example

The electrode film 1 consists of the flexible substrate 2, the functional layer 3, and the electrically conductive carbon layer 4. Alternatively, for example, though not shown, an under coat layer having a thickness of 1 to 100 nm may be further provided between the flexible substrate 2 and the functional layer 3. In this manner, the adhesive properties with the functional layer 3 can be furthermore improved, and the surface roughness can be adjusted.

### Examples

Next, the present invention is further described based on Examples and Comparative Examples shown below. The present invention is however not limited by these Examples and Comparative Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF

### EMBODIMENTS".

### Example 1

As a flexible substrate, a polyethylene terephthalate film (PET film) having a thickness of 50 µm was prepared. As a gas barrier layer (functional layer), a titanium layer (metal layer) having a thickness of 10 nm was formed on the upper surface of the PET film by a DC magnetron sputtering method under the environment of existence of an inert gas. As a target material, titanium was used, and a substrate temperature was set at 40°C and a degree of vacuum at the time of film-forming was set at 0.6 Pa.

Subsequently, a carbon layer having a thickness of 35 nm was formed on the upper surface of the titanium layer by a high-power pulse sputtering method under the environment of the existence of the inert gas. As the target material, carbon was used, and the substrate temperature was set at 40°C and the degree of vacuum at the time of the film-forming was set at 0.6 Pa.

In this manner, an electrode film sequentially including the flexible substrate, the functional layer, and an electrically conductive carbon layer was produced.

### Example 2

An electrode film was fabricated in the same manner as that of Example 1, except that the thickness of the titanium layer was changed to 15 nm.

### Example 3

An electrode film was fabricated in the same manner as that of Example 1, except that the thickness of the titanium layer was changed to 5 nm.

### Example 4

In Example 3, after the titanium layer was formed, the electrode film was taken out from a sputtering device to be left to stand for 24 hours under the atmospheric pressure, the upper surface of the titanium layer was oxidized, and a metal oxide layer (titanium oxide layer) was formed. Subsequently, a carbon layer was formed in the same manner as that of Example 3, thereby producing an electrode film.

### Comparative Example 1

An electrode film was produced in the same manner as that of Example 1, except that the titanium layer was not formed.

### Comparative Example 2

A carbon layer was formed on the upper surface of a silicon board under the same conditions as those of Example 1 by using the silicon board instead of the PET film, thereby producing an electrode board.

### (1) Measurement of Thickness

By using each of the electrode film and the electrode board of Examples and Comparative Examples, a cross-sectional sample for TEM was fabricated by a FIB micro-sampling method, and cross-sectional observation was carried out by using a field emission-type transmission electron microscope (FE-TEM, manufactured by JEOL Ltd., "JEM-2800") and the thickness of each of the layers was measured.

Element analysis was carried out by using an energy dispersion-type X-ray analysis device (EDX, manufactured by Thermo Fisher Scientific K.K., "NORAN system 7"), and a layer in which a corresponding metal and oxygen of detection limit or more were observed was defined as a metal oxide layer, and a layer in which the corresponding metal was detected and the oxygen was the detection limit or less was defined as a metal layer. The results are shown in Table 1.

### (2) Measurement of sp³ and sp²

In Examples and Comparative Examples, an X-ray was applied to the surface of each of the electrically conductive carbon layers by using an X-ray electron spectroscopy for chemical analysis device (ESCA), so that a bond energy (unit: eV, horizontal axis) and the intensity (unit: CPS, vertical axis) were measured, and a graph was drawn based on these.
Device: manufactured by ULVAC-PHI, INCORPORATED, "Quantum 2000"
X-ray source: monochrome AlKα
X-ray setting: 200 µmϕ [15 kV, 30 W]
Photoelectron take-out angle: 45° with respect to surface of sample
Electrification neutralization conditions: use of electron neutralization gun and Ar ion gun (neutralization mode) in combination
Bond energy: peak derived from C-C bond was set at 285.0 eV

The peak of sp³ and the peak of sp² were confirmed in the graph of each of the electrically conductive carbon layers in Examples and Comparative Examples, so that it was found out that both of the sp² bond and the sp³ bond were provided.

### (3) Measurement of Surface Resistance Value

Each of the surfaces (upper surfaces) at the side of the electrically conductive carbon layer in Examples and Comparative Examples was measured by a four-terminal method in conformity with JIS K 7194. The results are shown in Table 1.

### (4) Evaluation of Adhesive Properties

A grid peel test (each of the cells: 1 mm□, total: 100 cells) was carried out with respect to Examples and Comparative Examples in conformity with JIS K 5400, and the adhesive properties were evaluated in conformity with the following criteria. The results are shown in Table 1.

A case where peeling was 0 cell was evaluated as Excellent.

A case where peeling was 1 cell or more and 10 cells or less was evaluated as Good.

A case where peeling was 11 cells or more was evaluated as Bad.

### [Table 1]

**[Table 1]**

| | Substrate | Thickness of Gas Barrier Layer [nm] | Thickness of Metal Oxide Layer [nm] | Surface Resistance Value [Ω/□] | Adhesive Properties |
|---|---|---|---|---|---|
| Ex. 1 | PET Film | 10 | Absence | 2.5 × 10² | Excellent |
| Ex. 2 | PET Film | 15 | Absence | 1.4 × 10² | Excellent |
| Ex. 3 | PET Film | 5 | Absence | 2.8 × 10² | Excellent |
| Ex, 4 | PET Film | 5 | 3 | 2.8 × 10² | Good |
| Comparative Ex. 1 | PET Film | | | 4.5 × 10⁵ | Bad |
| Comparative Ex. 2 | Si Board | | | 1.2 × 10⁴ | Excellent |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

The electrode film of the present invention can be applied for various industrial products, and can be, for example, used as various electrodes such as electrode for an electrochemical measurement system.

### Description of Reference Numerals

- 1: Electrode film
- 2: Flexible substrate
- 3: Functional layer
- 4: Electrically conductive carbon layer

### EMBODIMENTS OF THE INVENTION

1. An electrode film comprising:
   a flexible substrate,
   a functional layer disposed at one side in a thickness direction of the flexible substrate, and
   an electrically conductive carbon layer disposed at one side in the thickness direction of the functional layer and having an sp² bond and an sp³ bond.
2. The electrode film according to embodiment 1, wherein
   the functional layer is a gas barrier layer.
3. The electrode film according to embodiment 1 or 2, wherein
   the functional layer is a metal layer.
4. The electrode film according to any one of embodiments 1 to 3, wherein
   the functional layer has a thickness of 5 nm or more.
5. The electrode film according to any one of embodiments 1 to 4, wherein
   a thickness of an oxide film formed at a one-side surface in the thickness direction of the functional layer is below 3 nm.
6. The electrode film according to any one of embodiments 1 to 5, wherein
   the flexible substrate is a polymer film.
7. The electrode film according to any one of embodiments 1 to 6, wherein
   the electrode film is an electrode for electrochemical measurement.
8. An electrochemical measurement system comprising:
   the electrode film according to embodiment 7.

## Claims

1. An electrode film (1) comprising:
a flexible substrate (2),
a functional layer (3) disposed at one side in a thickness direction of the flexible substrate (2) and in contact with the flexible substrate (2), wherein the functional layer (3) is an inorganic layer, and
an electrically conductive carbon layer (4) disposed at one side in the thickness direction of the functional layer (3) and having an sp² bond and an sp³ bond,
wherein the ratio of sp³ bonds to sp² bonds is 0.05 or more and 2.00 or less,
wherein the electrically conductive carbon layer (4) has a thickness of 5 nm or more and 500 nm or less, and
wherein the surface resistance value of a surface of the electrically conductive carbon layer (4) is 1.0 × 10⁴ Ω/□ or less.

2. The electrode film (1) according to claim 1, wherein the functional layer (3) is a gas barrier layer.

3. The electrode film (1) according to claim 1 or 2, wherein the functional layer (3) is a metal layer.

4. The electrode film (1) according to any one of claims 1 to 3, wherein the functional layer (3) has a thickness of 5 nm or more.

5. The electrode film (1) according to any one of claims 1 to 4, wherein a thickness of an oxide film formed at a one-side surface in the thickness direction of the functional layer (3) is below 3 nm.

6. The electrode film (1) according to any one of claims 1 to 5, wherein the flexible substrate (2) is a polymer film.

7. The electrode film (1) according to any one of claims 1 to 6, wherein the electrode film (1) is an electrode for electrochemical measurement.

8. An electrochemical measurement system comprising: the electrode film (1) according to claim 7.

9. A method of producing an electrode film (1), the method comprising:
a step of preparing a flexible substrate (2),
a step of providing a functional layer (3) on the flexible substrate (2), and
a step of providing an electrically conductive carbon layer (4) on the functional layer (3),
wherein the functional layer (3) is an inorganic layer,
wherein the electrically conductive carbon layer (4) has an sp² bond and an sp³ bond,
wherein the ratio of sp³ bonds to sp² bonds is 0.05 or more and 2.00 or less,
wherein the electrically conductive carbon layer (4) has a thickness of 5 nm or more and 500 nm or less,
wherein the surface resistance value of a surface of the electrically conductive carbon layer (4) is 1.0 × 10⁴ Ω/□ or less, and
wherein the functional layer (3) and the electrically conductive carbon layer (4) are formed on the flexible substrate in this order while the flexible substrate (2) is conveyed by a roll-to-roll method.

10. The method according to claim 9, wherein in the step of providing the functional layer (3) on the flexible substrate (2), the functional layer (3) is provided on the flexible substrate (2) by using a physical vapor deposition method.

11. The method according to claim 9 or 10, wherein in the step of providing the electrically conductive carbon layer (4) on the functional layer (3), the electrically conductive carbon layer (4) is provided on the functional layer (3) by using a physical vapor deposition method.
